# EUROPEAN PATENT SPECIFICATION

(11) **EP 1 358 295 B1**
(45) Date of publication and mention of the grant of the patent: **11.05.2005**
(21) Application number: 02712028.6
(22) Date of filing: 04.02.2002
(51) Int. Cl.: C09J 9/00

(54) **TRIBOLUMINESCENT MATERIALS IN ADHESIVE COMPOSITIONS FOR DETECTING TAMPERING OF A SEALED ARTICLE**
KLEBSTOFFZUSAMMENSETZUNG ENTHALTEND TRIBOLUMINESZENTE MATERIALIEN ZUR FESTSTELLUNG VOM HERUMHANTIEREN AN EINEM VERSIEGELTEN ARTIKEL
MATERIAUX TRIBOLUMINESCENTS EMPLOYES DANS DES COMPOSITIONS ADHESIVES PERMETTANT DE DETECTER LA MANIPULATION D'UN OBJET CACHETE

(30) Priority: 06.02.2001 GB 0102879
(43) Date of publication of application: 05.11.2003
(73) Proprietor: Qinetiq Limited, London, SW1E 6PD (GB)
(72) Inventor: GEDDES, Norman James, Malvern, Worcs WR14 3PS (GB); SAGE, Ian Charles, Malvern, Worcs WR14 3PS (GB); BOURHILL, Grant Hannah, Malvern, Worcs WR14 3PS (GB); MASON, Ian Robert, Malvern, Worcs WR14 3PS (GB)
(74) Representative: Lowther, Deborah
(86) International application number: PCT/GB2002/000449
(87) International publication number: WO 2002/062914

(56) References cited:
- EP-A- 1 191 076
- US-A- 3 075 853
- US-A- 5 858 495
- US-A- 6 071 632
- DATABASE CAPLUS [Online] CHEMICAL ABSTRACTS SERVICE, COLUMBUS, OHIO, US; DICKINSON, J. T.: "Photon-emission from peeling pressure sensitive adhesives" retrieved from STN Database accession no. 109:159365 XP002198630 & PROC. SPIE-INT. SOC. OPT. ENG. (1988), 910(FLUORESC. DETECT. 2), 13-20,

## Description

This invention relates to applications of triboluminescent materials, in particular it relates to the use of triboluminescent materials in adhesive compositions in methods for establishing that objects have been tampered with.

Triboluminescent materials are known - (L M Sweeting & J L Guido, J. of Luminescence, 33, (1985), p167, N Kitamura et al, Chem Phys Letts, 125, (1986), p360, B P Shandra, et al Pramana-J Phys, 29, (1987), p399, C R Hurt, et al Nature, 212, (1966), p179; L M Sweeting & A L Rheingold, J Am Chem Soc, 109,(1987), p2652 M B Hocking, et al, J. of Luminescence, 43, (1989), p309). Triboluminescence is the effect seen when a material emits light when particles of the material are damaged/fractured or strained.

Currently only a limited number of applications have been disclosed utilising the triboluminescent effect. PCT GB96/02778 and corresponding US 5905260 describe the use of triboluminescent compounds in an environment where they are used to detect damage to objects. GB 2232119 discloses a security marking technique comprising the use of triboluminescent materials.

It is an objective of the present invention to find alternative uses for triboluminescent materials.

According to a first aspect of this invention there is provided the use of an adhesive composition comprising an adhesive and one or more triboluminescent materials for detecting tampering of a sealed article.

Suitable triboluminescent materials may be chosen on the basis of one or more of the following characteristics:
- Bright emission
- Colour/wavelength of emission
- High stability to temperature and high melting point
- Compatibility with structural and adhesive resins
- Cost of manufacture
- Low toxicity
- Low environmental impact

Preferably the triboluminescent materials are chosen from the following general formulae: 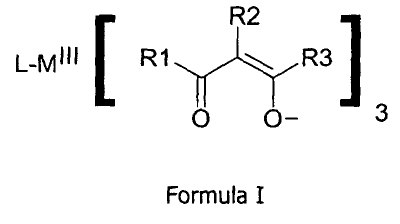 Wherein M is Eu, Tb, Dy or Sm;
R2 is H or C1-C6 alkyl or phenyl;
R1 and R3 are independently of each other selected from phenyl, H, C1-C6 alkyl;
L is p-N,N-dimethylaminopyridine, N-methylimidazole or p-methoxypyridine-N-oxide.

The C1-C6 alkyl groups can be straight chain or branched and are typically methyl, ethyl, n-propyl, isopropyl, n-butyl, sec-butyl, isobutyl, ter-butyl or the different positional isomers of pentyl and hexyl, cyclopentyl, cyclohexyl or methyl cyclopentyl.

Preferably the alkyl groups contain 1-4 carbon atoms.

Preferably M is Eu, Tb or Dy.

R2 is preferably H.
Most preferably R1 and R3 are each tert-butyl or phenyl.

The synthesis of compounds of formula I is described in WO 96/20942 and references therein including Eisentraut et al, Inorg. Syn. 11, 1968, 94.

### Other suitable compounds include:

Coumarin, phenanthrene, acenaphthene, resorcinol, m-aminophenol, aniline hydrochloride, phthalic anhydride, triphenylamine, p-anisidine, europium/terbium/manganese coordination complexes, cis-4-octene, uranyl nitrate hexahydrate, menthol, 9-anthrylmethanol [L M Sweeting & J L Guido, J. of Luminescence, 33, (1985), p167] various carbazoles [N Kitamura et al, Chem Phys Letts, 125, (1986), p360], zinc sulphide doped with luminescent impurities, uranyl nitrate, sucrose and sacharides, and the alkali halides such as sodium fluoride or lithium fluoride.

Further suitable compounds include tetrahedral manganese (II) complexes (for instance bis-triphenylphosphine oxide manganese II bromide) [B P Shandra, et al Pramana-J Phys, 29, (1987), p399]. Europium tetrakis (dibenzoylmethide)-triethylammonium [C R Hurt, et al Nature, 212, (1966), p179; L M Sweeting & A L Rheingold, J Am Chem Soc, 109,(1987), p2652] and 1,2,5-triphenylphosphole [M B Hocking, et al, J. of Luminescence, 43, (1989), p309], menthyl 9 anthracene carboxylate, menthol, lithium sulphate:anhydrous, saccharin, m-nitrobenzonitrile, N-acetylanthranilic acid, nicotinium salicylate, Hexaphenylcarbodiphosphorane, 9-anthrylethanol, [CH₃NH₃]₃Mn₂Cl₇

Preferably the triboluminescent material is chosen from M9AC, Europium tetrakis (dibenzoylmethide)-triethylammonium, terbium tris-tetramethylpentanedionate dimethylaminopyridine adduct.

Typical adhesives include:

Epoxy adhesives based on adducts of bisphenol-A and epichlorhydrin cured by polyamine or anhydride initiators, and similar adhesives based on other epoxides, UV curable and thermally curable adhesives based on acrylic, vinylic, styrenic, or thiol/ene monomer systems, cyanoacrylate adhesives, pressure sensitive adhesives, hot melt adhesives, latex based adhesives, PVA adhesives, solvent based adhesives, urea formaldehyde and melamine formaldehyde adhesives, anaerobic adhesives, bis-diallyamine derived adhesives etc..

In addition to the adhesive and triboluminescent material the adhesive composition may also comprise one or more of the following additional components such as solvents, wetting agents, flow modifiers, plasticisers, curing agents, dyes, fillers, stabilisers, anti-oxidants etc as is understood in the art. The compositions may include water as a solvent or dispersant or an organic solvent such as dichloromethane, acetone, tetrahydrofuran etc. may be present in order to ensure that the composition is homogenous and will spread well.

The above adhesive composition may be carried upon a tape substrate and used for detecting tampering of a sealed article, in which case the adhesive tape that flashes may be made by a method which comprises the steps of:
selecting a substantially transparent substrate,
optionally depositing an adhesion promoter on the substrate,
depositing the adhesive composition comprising a triboluminescent material on to the substrate,
optionally drying the adhesive composition,
optionally depositing a further laminating sheet on top of the adhesive composition before or after any drying stage.

The laminating sheet, if applied, may be treated with a release layer.

By flashes when used it is meant that the adhesive tape may flash when it is removed from a roll of adhesive tape or it may flash when it is removed from the object to which it has been applied. The adhesive tape may also flash when it is cut. How many times a particular piece of adhesive tape flashes will depend on the nature of the triboluminescent materials used and the adhesive and the substrate to which it has been adhered.

Drying may be carried out using any of the known techniques - these include:

Solvent removal, removal of a dispersant phase, chemical polymerisation or cross linking, chemical reaction or condensation and may be aided by known methods such as application of heat or UV light.

The triboluminescent materials are preferably chosen from those earlier aspects of the present invention as are the adhesives.

The substrate may comprise triboluminescent material itself, typically this would be carried out during formation of the substrate.

The adhesive compositions are used on envelopes and tape and the like for indicating whether or not an envelope or package has been previously opened. Alternatively, seals on containers may comprise adhesive/triboluminesecent compositions so it is evident whether or not a container has been tampered with or damaged such that the seal has been broken in some way. For some of these particular type applications the adhesive and triboluminescent materials may with advantage be selected such that the composition only triboluminesces once.

A further aspect of this invention provides a method for detecting tampering of a sealed article comprising the steps of:
coating a part of an unsealed article with an adhesive composition comprising an adhesive and one or more triboluminescent materials, and
sealing the article,
such that on breaking the seal triboluminescence is observed.

The article may be any type of suitable container, for example an envelope or packaging or a bottle and top.

In the above method it is also possible for the adhesive/triboluminescent mixture to be applied once the article has been sealed in some way. An example of this could be a bottle with a screw top wherein the adhesive/triboluminescent mixture could be added once the top has been screwed on to the bottle. The mixture could also be added before and after the sealing.

The adhesive composition and various other additives are as given for the first aspect of the invention.

Yet another aspect is an article obtainable by the method of the present invention.

The present invention also provides for opening packages, envelopes and the like with added aesthetic appeal. It is an objective of the present invention to provide aesthetic effects in relation to adhesives/adhesive tape through the use of technical structures and/or other technical means.

In all of the above applications the triboluminescence is taken to be of sufficient intensity that the human eye is capable of seeing it in substantially day light and/or room lighting conditions.

A triboluminescent effect may also be provided for one or more of the above applications which is capable of observation in darkened conditions or by a detecting instrument. This may provide an aesthetic effect or may provide utility for example, as covert markings which authenticate an item to which they are applied or provide an anti-tampering security feature to packaging.

The invention will now be described by way of example.

A flashing form of adhesive tape for use according to the present invention may be fabricated as follows. An adhesive compound which may be cured via any of the known methods of curing including by uv polymerisation and a triboluminescent material are placed on to a sheet of plastic material. A further sheet of plastic is pressed on top of the first sheet, sandwiching the adhesive/triboluminescent mixture. The sheets plus mixture are then subject to curing such that the monomer polymerises - it may be the case that an amount of the monomer remains unpolymerised. In order to assess the tape the sheets may be pulled apart to reveal bright flashes.

It is not necessarily the case that the adhesive is a monomer system ― any type of adhesive known to those skilled in the art would be suitable. The mixture need not necessarily require curing.

### Example 1

Two plastic sheets in this case polyethylene terephthalate (PET) were taken and a sample of an adhesive compound unpolymerised Norland 65 (N65) and a uv curable monomer system with triboluminescent menthyl 9 anthracene carboxylate (M9AC) was placed on one sheet. The second sheet was taken and pressed onto the first sheet sandwiching the mixture. The two sheets were pressed closely together. The sheets were then placed into an Hereaus Suntest CPS+ apparatus and the N65 was polymerised. Once the N65 mixture was polymerised the sheets were pulled apart. Bright flashes were observed.

### Example 2

A triboluminescent adhesive formulation was prepared by adding Europium tetrakis (dibenzoylmethide)-triethylammonium to a solution of pressure sensitive adhesive based on poly(2-ethylhexyl acrylate-co-acrylic acid). The resulting dispersion was coated by doctor blade onto a reel of cellulose acetate tape and dried. Lengths of the resulting tape were applied under hand pressure to paper, cardboard, aluminium sheet, plastic, PET, medium density fibre board, wood. After standing for 24 hours the tape was pulled by hand from each substrate. In all cases clearly visible triboluminescent emission was seen under room lighting.

### Example 3

A polyethylene pharmaceutical container was sealed with an aluminised polyethylene membrane using hot melt adhesive into which was incorporated 20% by weight of terbium tris-tetramethylpentanedionate dimethylaminopyridine adduct. Removal of the seal provided a readily visible triboluminescence emission.

## Claims

1. Use of an adhesive composition comprising an adhesive and one or more triboluminescent materials for detecting tampering of a sealed article.

2. Use according to claim 1 wherein the triboluminescent materials are chosen from the following general formulae: 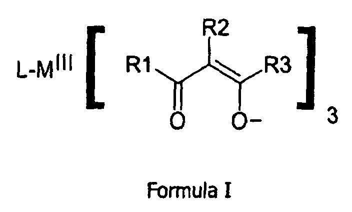 Wherein M is Eu, Tb, Dy or Sm;
R2 is H or C1-C6 alkyl or phenyl;
R1 and R3 are independently of each other selected from phenyl, H, C1-C6 alkyl;
L is p-N,N-dimethylaminopyridine, N-methylimidazole or p-methoxypyridine-N-oxide;
the C1-C6 alkyl groups can be straight chain or branched.

3. Use according to claim 2 wherein the C1-C6 alkyl groups are selected from methyl, ethyl, n-propyl, isopropyl, n-butyl, sec-butyl, isobutyl, ter-butyl or the different positional isomers of pentyl and hexyl, cyclopentyl, cyclohexyl or methyl cyclopentyl.

4. Use according to claim 2 wherein R1 and R3 contain 1-4 carbon atoms, M is Eu, Tb or Dy, R2 contains 1-4 carbon atoms or is H.

5. Use according to claim 4 wherein R2 is H and R1 and R3 are tert-butyl or phenyl.

6. Use according to claim 1 wherein the triboluminescent material is chosen from M9AC, Europium tetrakis (dibenzoylmethide)-triethylammonium, terbium tris-tetramethylpentanedionate dimethylaminopyridine adduct.

7. Use according to any of claims 1-6 wherein the adhesive is chosen from epoxy adhesives, UV curable and thermally curable adhesives based on acrylic, vinylic, styrenic, or thiol/ene monomer systems, cyanoacrylate adhesives, pressure sensitive adhesives, hot melt adhesives, latex based adhesives, PVA adhesives, solvent based adhesives, urea formaldehyde and melamine formaldehyde adhesives, anaerobic adhesives, bis-diallyamine derived adhesives.

8. Use according to any of claims 1-7 wherein the adhesive composition further comprises one or more of the following additional components; solvents, wetting agents, flow modifiers, plasticisers, curing agents, dyes, fillers, stabilisers, anti-oxidants.

9. Use according to any preceding claim wherein the article is a package.

10. Use according to claim 9 wherein the package is an envelope or bottle and top.

11. Use according to any preceding claim, wherein the adhesive composition is carried upon a tape substrate.

12. Use according to claim 11, wherein said tape substrate is substantially transparent.

13. A method for detecting tampering of a sealed article comprising the steps of: coating a part of an unsealed article with an adhesive composition comprising an adhesive and one or more triboluminescent materials, and sealing the article, such that on breaking the seal triboluminescence is observed.

14. An article obtainable by a method as claimed in claim 13.

## Patentansprüche

1. Verwendung einer Klebstoffzusammensetzung, die einen Klebstoff und ein oder mehrere tribolumineszente(s) Material(ien) enthält, zur Feststellung von Manipulationen an einem versiegelten Artikel.

2. Verwendung nach Anspruch 1, wobei die tribolumineszenten Materialien ausgewählt sind unter Verbindungen der folgenden allgemeinen Formel: 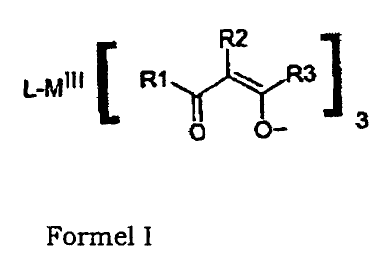 worin M Eu, Tb, Dy oder Sm ist;
R2 H oder C1-C6-Alkyl oder Phenyl ist;
R1 und R3 jeweils unabhängig voneinander unter Phenyl, H C1-C6-Alkyl ausgewählt sind;
L p-N,N-Dimethylaminopyridin, N-Methylimidazol oder p-Methoxypyridin-N-oxid ist;
die C 1-C6-Alkylgruppen geradkettig oder verzweigt sein können.

3. Verwendung nach Anspruch 2, wobei die C1-C6-Alkylgruppen ausgewählt sind unter Methyl, Ethyl, n-Propyl, Isopropyl, n-Butyl, sek-Butyl, Isobutyl, tert-Butyl oder den verschiedenen Stellungsisomeren von Pentyl und Hexyl, Cyclopentyl, Cyclohexyl oder Methyl-cyclopentyl.

4. Verwendung nach Anspruch 2, wobei R1 und R3 1-4 Kohlenstoffatome enthalten, M Eu, Tb oder Dy ist, R2 1-4 Kohlenstoffatome enthält oder H ist.

5. Verwendung nach Anspruch 4, wobei R2 H ist und R1 und R3 tert-Butyl oder Phenyl sind.

6. Verwendung nach Anspruch 1, wobei das tribolumineszente Material ausgewählt ist unter M9AC, Europium-tetrakis(dibenzoylmethid)-triethylammonium, Terbium-tris-tetramethylpentandionat-dimethylaminopyridin-Addukt.

7. Verwendung nach einem der Ansprüche 1-6, wobei der Klebstoff ausgewählt ist unter Epoxy-Klebstoffen, UV-härtbaren und thermisch härtbaren Klebstoffen auf Basis von acrylischen, vinylischen, styrolischen oder Thiol/En-Monomer-Systemen, Cyanoacrylat-Klebstoffen, druckempfindlichen Klebstoffen, Heißschmelz-Klebstoffen, Latex-basierten Klebstoffen, PVA-Klebstoffen, Lösungsmittel-basierten Klebstoffen; Harnstoff-Formaldehyd- und Melamin-Formaldehyd-Klebstoffen, anaeroben Klebstoffen und von Bis-diallylamin abgeleiteten Klebstoffen.

8. Verwendung nach einem der Ansprüche 1-7, wobei die Klebstoffzusammensetzung weiterhin einen oder mehrere der folgenden zusätzlichen Bestandteile enthält: Lösungsmittel, Befeuchtungsmittel, Fließmodifikatoren, Weichmacher, Härtungsmittel, Farbstoffe, Füllstoffe, Stabilisatoren, Antioxidantien.

9. Verwendung nach einem der vorigen Ansprüche, wobei der Artikel eine Verpackung ist.

10. Verwendung nach Anspruch 9, wobei die Verpackung eine Umhüllung oder eine Flasche mit Verschluss ist.

11. Verwendung nach einem der vorigen Ansprüche, wobei die Klebstoffzusammensetzung sich auf einem Bandträgermaterial befindet.

12. Verwendung nach Anspruch 11, wobei das Bandträgermaterial weitgehend durchsichtig ist.

13. Verfahren zur Feststellung von Manipulationen an einem versiegelten Artikel, bei dem ein Teil eines unversiegelten Artikels mit einer Klebstoffzusammensetzung, die einen Klebstoff und ein oder mehrere tribolumineszente(s) Material(ien) enthält, beschichtet und der Artikel versiegelt wird, so dass beim Aufbrechen der Versiegelung Tribolumineszenz festgestellt wird.

14. Artikel, der nach einem Verfahren nach Anspruch 13 erhältlich ist.

## Revendications

1. Utilisation d'une composition adhésive comprenant un adhésif et un ou plusieurs matériaux triboluminescents permettant de détecter la manipulation d'un objet cacheté.

2. Utilisation selon la revendication 1 dans laquelle les matériaux triboluminescents sont choisis parmi les formules générales suivantes : 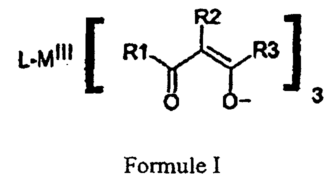 dans laquelle M est Eu, Tb, Dy ou Sm ;
R2 est H ou un alkyle en C₁ à C₆ ou phényle ;
R1 et R3 sont indépendamment l'un de l'autre choisis parmi un phényle, H, alkyle en C₁ à C₆;
L est la p-N,N-diméthylaminopyridine, le N-méthylimidazole ou le N-oxyde de p-méthoxypyridine ;
les groupes alkyle en C₁ à C₆ peuvent être à chaîne linéaire ou ramifiés.

3. Utilisation selon la revendication 2 dans laquelle les groupes alkyle en C₁ à C₆ sont choisis parmi le méthyle, éthyle, n-propyle, isopropyle, n-butyle, sec.-butyle, isobutyle, tert.-butyle ou les différents isomères de position du pentyle et de l'hexyle, le cyclopentyle, cyclohexyle ou méthylcyclopentyle.

4. Utilisation selon la revendication 2 dans laquelle R1 et R3 contiennent de 1 à 4 atomes de carbone, M est Eu, Tb ou Dy, R2 contient de 1 à 4 atomes de carbone ou est H.

5. Utilisation selon la revendication 4 dans laquelle R2 est H et R1 et R3 sont le tert.-butyle ou le phényle.

6. Utilisation selon la revendication 1 dans laquelle on choisit le matériau triboluminescent parmi M9AC, europium tétrakis(dibenzoylméthide)-triéthylammonium, l'adduit terbium tris-tétraméthylpentanedionate diméthylaminopyridine.

7. Utilisation selon l'une quelconque des revendications 1 à 6 dans laquelle on choisit l'adhésif parmi les adhésifs époxy, les adhésifs durcissables thermiquement et durcissables par UV à base de systèmes de monomères acryliques, vinyliques, styréniques, ou thiol/ène, les adhésifs cyanoacrylate, les adhésifs sensibles à la pression, les adhésifs thermofusibles, les adhésifs à base de latex, les adhésifs APV, les adhésifs à base de solvant, les adhésifs urée formaldéhyde et mélamine formaldéhyde, les adhésifs anaérobies, les adhésifs dérivés de bis-diallylamine.

8. Utilisation selon l'une quelconque des revendications 1 à 7 dans laquelle la composition adhésive comprend en outre un ou plusieurs des composants additionnels suivants : solvants, agents mouillant, agents modifiant l'écoulement, plastifiants, agents durcisseurs, colorants, charges, stabilisants, anti-oxydants.

9. Utilisation selon l'une quelconque des revendications précédentes dans laquelle l'objet est un emballage.

10. Utilisation selon la revendication 9, dans lequel l'emballage est une enveloppe ou une bouteille et un couvercle.

11. Utilisation selon l'une quelconque des revendications précédentes, dans laquelle la composition adhésive est portée sur un substrat en ruban.

12. Utilisation selon la revendication 11, dans laquelle ledit substrat en ruban est essentiellement transparent.

13. Procédé de détection de manipulation d'un objet cacheté comprenant les étapes consistant à :
revêtir une partie d'un objet non cacheté avec une composition adhésive comprenant un adhésif et un ou plusieurs matériaux triboluminescents, et à cacheter l'objet, de sorte que l'on observe de la triboluminescence lorsque l'on brise le cachet.

14. Objet susceptible d'être obtenu par un procédé selon la revendication 13.
